# EUROPÄISCHE PATENTANMELDUNG

(11) **EP 0 953 747 A2**
(43) Veröffentlichungstag der Anmeldung: **03.11.1999**
(21) Anmeldenummer: 99106521.0
(22) Anmeldetag: 30.03.1999
(51) Int. Cl.: F02B 77/13

(54) **Geräuschkapsel für den Motor eines Kraftfahrzeuges**

(30) Priorität: 28.04.1998 DE 19818859
(71) Anmelder: DaimlerChrysler AG, 70567 Stuttgart (DE)
(72) Erfinder: Büsing, Stephan, 70597 Stuttgart (DE); Hägele, Klaus, 73572 Heuchlingen (DE); Kuhn, Günther, 73061 Ebersbach (DE); Spie , Hans Rainer, 73342 Bad Ditzenbach (DE); Weidmann, Werner, 71120 Grafenau (DE); Wogh, Erwin, 73230 Kirchheim (DE)

(57) **Zusammenfassung**

Eine Geräuschkapsel (2) für den Motor eines Kraftfahrzeuges mit einem in Fahrzeughochachse unten liegenden Bereich (1) der Abgasanlage soll geringfügig in den an sich freizuhaltenden Bodenfreiheitsraum eingreifen können, ohne bei einem Aufprall an ein in dem Bodenfreiheitsraum liegendes Hindernis zerstört zu werden.

Zu diesem Zweck ist eine den unten liegenden Bereich der Abgasanlage umfassende Geräuschkapsel (2) gegenüber einer von unten angreifenden Kraft elastisch nachgiebig ausgebildet.

## Beschreibung

Die Erfindung betrifft eine Geräuschkapsel für den Motor eines Kraftfahrzeuges nach dem Oberbegriff des Patentanspruchs 1.

Für eine gute Geräuschisolierung nach außen ist es wünschenswert, einen unterhalb des Motors verlaufenden Bereich der Abgasanlage durch die Geräuschkapsel mit zu umfassen. Eine die Abgasanlage derart umfassende Geräuschkapsel kann bei Fahrzeugen mit niedriger Bodenfreiheit und/oder tief gelegener Abgasanlage in den an sich von Einbauten frei zu haltenden Bodenfreiheitsraum eingreifen.

Die Erfindung beschäftigt sich mit dem Problem, in einem solchen Fall, in dem eine den unterhalb des Motors liegenden Bereich der Abgasanlage umschließende Geräuschkapsel in den Bodenfreiheitsraum eingreift, Maßnahmen zu schaffen, die ein vollständiges Umschließen der betreffenden Abgasanlage ohne generelle Vergrößerung der Bodenfreiheit ermöglichen.

Gelöst wird dieses Problem durch eine Ausführung nach den kennzeichnenden Merkmalen des Patentanspruchs 1.

Die Erfindung beruht auf dem allgemeinen Gedanken, die Geräuschkapsel in dem Bereich, in dem sie den unterhalb des Motors liegenden Bereich der Abgasanlage umschließt, in den an sich frei zu haltenden Bodenfreiheitsraum des Fahrzeuges geringfügig eingreifen zu lassen und in diesem Bereich elastisch verformbar auszubilden. Die elastische Verformbarkeit führt bei einem Aufprall des betreffenden Geräuschkapselbereiches auf ein Fahrbahnhindernis lediglich zu einer temporären Verformung und nicht Zerstörung dieses Bereiches. Die elastische Verformbarkeit kann grundsätzlich auf praktisch jede erdenkbare Weise erreicht werden. Wichtig ist lediglich, daß eine ausreichende Nachgiebigkeit gegeben ist, die eine Zerstörung des nachgiebig gestalteten Bereiches bei dem Aufprall auf ein Fahrbahnhindernis zumindest im Regelfall ausschließt.

Die elastische Nachgiebigkeit kann dabei ausschließlich in demjenigen Bereich vorliegen, der im Umgebungsbereich der Abgasanlage an unterster Stelle liegt oder auch dadurch, daß die gesamte Geräuschkapsel elastisch befestigt ist.

Vorzugsweise sollte allerdings in erster Linie der direkt gefährdete, an unterster Stelle unterhalb der Abgasanlage liegende Geräuschkapselbereich elastisch verformbar sein. Wenn bei einer elastischen Ausgestaltung dieses Bereiches die Geräuschkapsel auch noch als Ganzes federnd nachgibt bzw. federnd gelagert ist, so stellt dies noch einen zusätzlichen Vorteil dar.

Der an unterster Stelle gelegene von der Geräuschkapsel nach unten abragende aufprallgefährdete Bereich kann als Ganzes elastisch nachgiebig geformt und aus nachgiebigem Material hergestellt sein oder/und durch elastische Mittel mit den angrenzenden Bereichen der Geräuschkapsel verbunden sein.

Der elastisch auszubildende untere Bereich der Geräuschkapsel kann insbesondere aus einem gegenüber dem übrigen Material der Kapsel unterschiedlichen Material bestehen. Die unterschiedlichen Materialien können fest oder lösbar miteinander verbunden sein.

Fest miteinander verbunden können die Materialien beispielsweise dann sein, wenn die Geräuschkapsel aus Kunststoff besteht und eine Materialverbindung bereits bei der Formgebung möglich ist. Eine feste Verbindung kann darüber hinaus auch beispielsweise durch Verschweißen oder Vernieten erfolgen.

Eine lösbare Verbindung bietet den Vorteil, daß in den Verbindungsstellen eine zusätzliche elastische Nachgiebigkeit erreicht werden kann. Zudem bietet eine lösbare Verbindung den Vorteil, den betreffenden Bereich bei einer Beschädigung durch einen unzulässig großen Aufschlag einfach in der Form eines Einsatzteiles austauschen zu können.

Ist die Geräuschkapsel beispielsweise aus dem Material PP GM (Polypropylen - glasmattenverstärkt)so kann der elastisch verformbare Bereich aus dem Material PP-EPDM (Elastomer modifiziertes Polypropylen) bestehen. In diesem Fall liegen gleichartige Materialien vor, was für eine sortenreine Entsorgung wichtig ist.

Für die elastische Nachgiebigkeit des entsprechend ausgebildeten Geräuschkapselbereiches kann insbesondere die Formgestaltung von besonderer Bedeutung sein. So kann eine federmembranartige Ausbildung besonders zweckmäßig sein, da hierdurch nach einem Einschnappen des Membranbereiches ein guter Rückfederungseffekt gegeben ist. Wichtig ist, daß ein ausreichend großer Einfederungsweg zur Verfügung steht, bevor der eingeschnappte Bereich eine labile Verformungszone erreicht, in der ein Umschnappen in die entgegengesetzte Richtung möglich wird.

Nachstehend noch näher beschriebene Ausführungsbeispiele der Erfindung sind in der Zeichnung dargestellt.

In dieser zeigen
- Fig. 1: eine perspektivische Draufsicht auf einen Ausschnitt aus der dem Boden einer Geräuschkapsel in einem einen Bereich der Abgasanlage umschließenden Bereich vom Inneren der Geräuschkapsel aus gesehen,
- Fig. 2: eine Ansicht auf den Boden der Geräuschkapsel nach Fig. 1,
- Fig. 3: eine Ansicht auf eine Stirnseite eines lösbar im unteren Bereich einer Geräuschkapsel angebrachten, elastisch verformbaren Einsatzteiles.

Unterhalb eines nicht dargestellten Motors eines Kraftfahrzeuges verläuft ein Bereich 1 einer Abgasanlage in der Form einer Abgasleitung. Dieser Bereich 1 der Abgasanlage ist zusammen mit dem Fahrzeugmotor von einer Geräuschkapsel 2 umschlossen. Die Geräuschkapsel 2 ist in demjenigen Bereich, in dem sie an den Bereich 1 in der Abgasanlage angrenzt, nach unten gewölbt. Dieser Bereich ist elastisch verformbar ausgebildet und in der Zeichnung mit 3 bezeichnet.

Eine solche elastische Verformbarkeit kann beispielsweise durch den Einsatz eines entsprechenden Materials erreicht werden. Ein solches Material kann PP-EPDM sein. Die übrigen Bereiche der Geräuschkapsel können in diesem Fall aus dem Material PP GM gefertigt sein. Der elastisch verformbare Bereich kann getrennt von der übrigen Geräuschkapsel hergestellt und durch Verschweißen mit der Geräuschkapsel 2 verbunden sein.

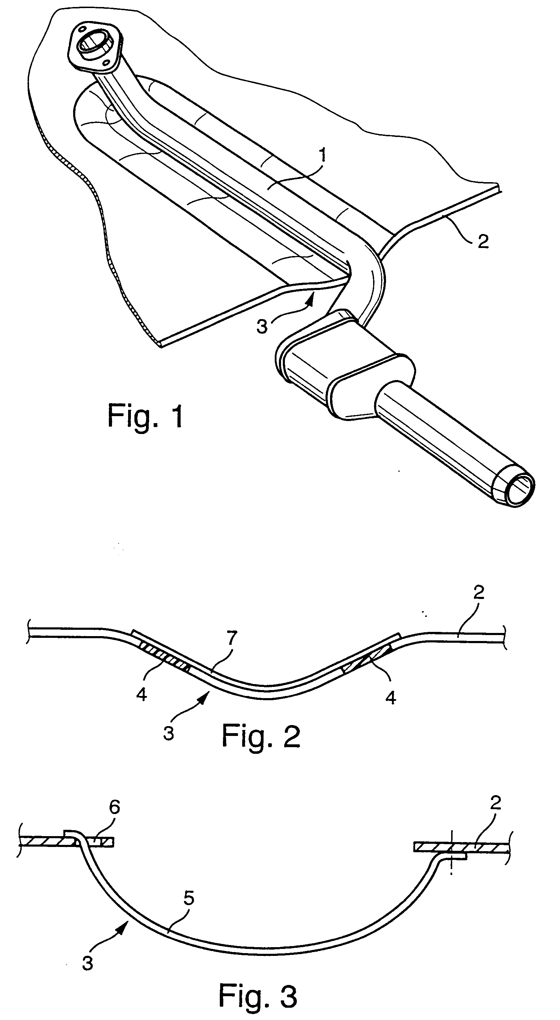

Die vorbeschriebene Ausführung ist in Fig. 1 dargestellt. Die Form der Auswölbung ist derart gewählt, daß ein Ein- und Rückschnappen dieses Bereiches ähnlich wie bei einer Membranfeder möglich ist.

In Fig. 2 ist ein in die Geräuschkapsel 2 eingeformter elastischer Bereich 3 dargestellt, bei dem die elastische Nachgiebigkeit in erster Linie durch eingeformte elastische Materialbereiche 4 erzielt werden.

Bei der Ausführung nach Fig. 3 ist der elastisch verformbare Bereich 3 durch ein lösbar befestigtes Einsatzteil 5 gegeben. Dieses Einsatzteil 5 ist auf einer Seite in Schlitze 6 der Geräuschkapsel 2 eingehängt und auf der anderen Seite mit der Geräuschkapsel verschraubt. Das Einsatzteil 5 besteht aus elastisch verformbarem Material und besitzt vorzugsweise ebenfalls eine membranfederartige Gestalt.

Die vorbeschriebenen Ausführungsformen zur Erzielung einer elastischen Nachgiebigkeit können mit die Nachgiebigkeit der Geräuschkapsel 2 als Ganzes bewirkenden Maßnahmen kombiniert werden.

Durch eine erfindungsgemäß gestaltete Geräuschkapsel kann ein unterhalb des zu kapselnden Motors liegender Bereich der Abgasanlage auch dann zusammen mit dem Motor eingekapselt werden, wenn dieser Bereich bereits in den an sich frei zu haltenden Bodenfreiheitsraum unterhalb eines Fahrzeuges eingreift.

Wegen der von dem zu kapselnden Bereich der Abgasanlage ausgehenden hohen Wärmeabstrahlung muß der angrenzende Geräuschkapsel-Wandbereich einen teilweise relativ großen Abstand von dem betreffenden Abgasanlagenbereich aufweisen. Anderenfalls kann es zu einer überhitzungsbedingten Beschädigung des Kapselmaterials kommen. Einen bestimmten Abstand erfordert auch ein Schwingen der Abgasanlage. Um den überhitzungsschutzbedingten Abstand möglichst gering halten zu können, ist es zweckmäßig, den hitzegefährdeten Bereich der inneren Geräuschkapselwand mit einer gut wärmeleitenden Folie, wie beispielsweise Aluminium, auszukleiden. Eine solche Wärmeleitfolie 7 ist in Fig. 2 dargestellt.

## Patentansprüche

1. Geräuschkapsel für den Motor eines Kraftfahrzeuges mit einem in Fahrzeughochachse unten liegenden, durch die Geräuschkapsel umfaßten Bereich der Abgasanlage, bei der dieser Teilbereich der Geräuschkapsel gegenüber einer von unten angreifenden Kraft zumindest verstärkt elastisch nachgiebig ausgebildet und in gleicher Weise mit dem angrenzenden, aus unterschiedlichem Material bestehenden Bereich der Geräuschkapsel verbunden ist,
**dadurch gekennzeichnet,**
daß der Teilbereich (3) einstückig und unterbrechungsfrei in die angrenzenden Bereiche der Geräuschkapsel (2) übergeht und federmembranartig ausgebildet ist.

2. Geräuschkapsel nach Anspruch 1,
**dadurch gekennzeichnet,**
daß der Teilbereich (3) aus dem Material PP-EPDM und die angrenzenden Bereiche aus dem Material PP GM bestehen.

3. Geräuschkapsel nach Anspruch 1 oder 2,
**dadurch gekennzeichnet,**
daß der an der untersten Stelle gelegene, an den gekapselten Abgasanlagenbereich angrenzende Teilbereich (3) der Geräuschkapsel (2) elastisch mit einer Wärmeleitfolie (7) ausgekleidet ist.
